(19) Europäisches Patentamt

European Patent Office

Office européen des brevets

(11) **EP 4 273 577 B1**

(12) **EUROPEAN PATENT SPECIFICATION**

(45) Date of publication and mention
of the grant of the patent:
**18.02.2026 Bulletin 2026/08**

(21) Application number: **21912985.5**

(22) Date of filing: **02.07.2021**

(51) International Patent Classification (IPC):
**G01S 13/32** *(2006.01)*        **G01S 13/34** *(2006.01)*

(52) Cooperative Patent Classification (CPC):
**G01S 13/345; G01S 13/32**

(86) International application number:
**PCT/CN2021/104198**

(87) International publication number:
**WO 2022/142231 (07.07.2022 Gazette 2022/27)**

(54) **DETECTION METHOD USING FREQUENCY MODULATED CONTINUOUS WAVE AND LIDAR**

DETEKTIONSVERFAHREN MIT FREQUENZMODULIERTER KONTINUIERLICHER WELLE UND LIDAR

PROCÉDÉ DE DÉTECTION UTILISANT UNE ONDE CONTINUE MODULÉE EN FRÉQUENCE ET LIDAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2020 CN 202011623330**

(43) Date of publication of application:
**08.11.2023 Bulletin 2023/45**

(73) Proprietor: **Hesai Technology Co., Ltd.
Shanghai 201821 (CN)**

(72) Inventors:
• **PAN, Zhengqing**
**Shanghai 201821 (CN)**
• **XIANG, Shaoqing**
**Shanghai 201821 (CN)**

(74) Representative: **Appelt, Christian W.
Boehmert & Boehmert
Anwaltspartnerschaft mbB
Pettenkoferstrasse 22
80336 München (DE)**

(56) References cited:
CN-A- 102 707 266      CN-A- 105 487 060
CN-A- 108 120 975      CN-A- 108 415 010
CN-A- 108 415 010      JP-A- 2010 112 937
KR-A- 20110 002 171    US-B2- 10 036 805

**Description**

**TECHNICAL FIELD**

The present disclosure relates to the field of photoelectric detection, and in particular, to a method of performing detection using a frequency modulated continuous wave (FMCW) and a lidar.

**BACKGROUND**

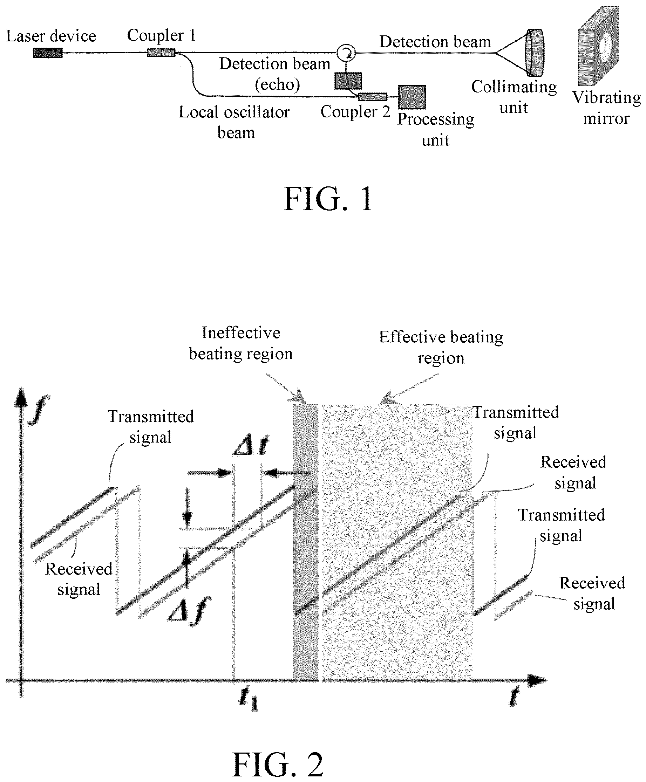

FIG. 1 shows a structural diagram of a frequency modulated continuous wave (FMCW) radar. A frequency modulated beam (a modulation unit is not shown in the figure) is split into a local oscillator beam and a detection beam through a coupler 1. The detection beam is emitted after passing through a collimating unit, and sweeps a space through a vibrating mirror. A detection beam reflected by a target object (a detection beam echo) is reflected by the vibrating mirror and received by the collimating unit, and re-enters the system to perform coherent beating with the local oscillator beam. Distance and speed information of the target object may be analyzed according to a frequency (always positive) of a beating signal. In FIG. 1, the detection beam echo is received by a detector after passing through a circulator, and then the detection beam echo is mixed with the local oscillator beam in a coupler 2. A processing unit, for example, including a low-pass filtering unit and an A/D sampling unit performs low-pass filtering on the detection beam echo and the local oscillator beam after mixing, to obtain the beating signal, and performs analog-digital conversion and then performs Fast Fourier transform (FFT), to obtain a frequency and its corresponding amplitude of the beating signal between the transmitted signal (the detection beam) and the received signal (the detection beam echo).

Due to a time delay of the echo beam relative to the local oscillator beam, an actual effective beating time period is the difference between a current linear frequency modulation duration and the echo delay time, and the other segments are ineffective beating regions caused by the time delay, as shown in FIG. 2.

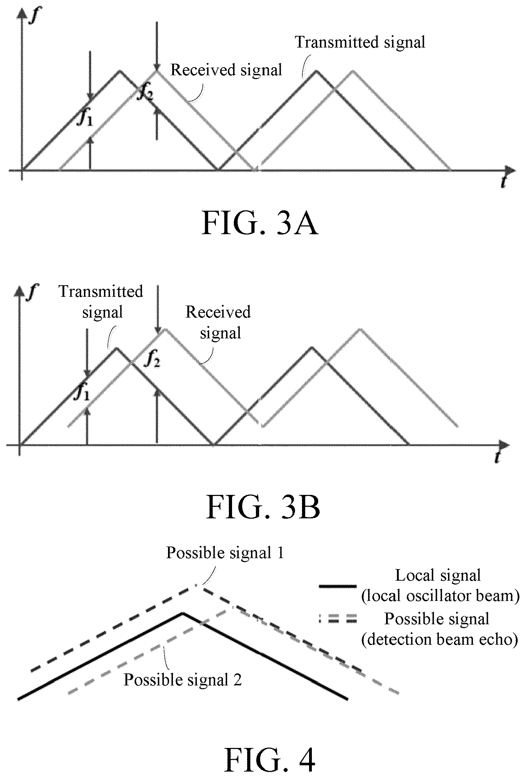

In order to obtain the time delay and a Doppler frequency shift of the echo signal at the same time, a combination of linear frequency sweep signals with two slopes may be used. A triangular wave is most frequently used, as shown in FIG. 3A and FIG. 3B. FIG. 3A shows a case without considering the Doppler frequency shift, and FIG. 3B shows a case considering the Doppler frequency shift.

Frequencies $f_1$ and $f_2$ of the beating signal at a rising edge and a falling edge of the triangular wave may be expressed as:

$$f_1 = \left| f_Z - f_v \right| \quad (1)$$

$$f_2 = \left| f_Z + f_v \right| \quad (2)$$

where $f_Z$ is a frequency shift (i.e., a frequency difference) of the rising edge/falling edge without considering the Doppler frequency shift, as shown in FIG. 3A, and $f_v$ is the Doppler frequency shift. According to the above formulas (1) and (2), four groups of solutions with respect to $f_Z$ and $f_v$ may be obtained. Since the distance is always greater than zero: $f_Z>0$, two sets of solutions may be eliminated. However, as shown in FIG. 4, for a possible signal 1, $|f_v| > |f_Z|$, and for a possible signal 2, $|f_v| < |f_Z|$. Beating results between echo signals and local signals of the two possible signals are the same, and therefore the two possible signals cannot be distinguished from each other. As a result, measurement of high-speed objects in short range cannot be realized by the triangular wave frequency modulation.

Moreover, the FMCW lidar faces the problem of multiple echoes. For example, if the vibrating mirror sweeps excessively fast at an edge of a target object, beating signals in the rising edge and the falling edge will include different measured objects at front and rear. If the vibrating mirror sweeps excessively slow at the edge of the target object, the beating signals in the rising edge and the falling edge will carry reflection information of different objects at front and rear, and therefore a problem of how to perform correct matching will be caused.

The above contents of the background are merely technologies known to the inventor, and do not represent prior art.

KR 2011 0002171 A describes a method and an apparatus for detecting range and velocity of a target by using radar and computer readable recording medium for recording program therefor. A signal converter frequency-modulates the transmission signal of the radar for a plurality of targets. A frequency detector detects an up-beat frequency, a down-beat frequency, and a doppler frequency. A correlation frequency candidate detector detects a correlation frequency candidate set.

CN 108415010 A describes a radar multi-target detection method based on trapezoid linear frequency modulation continuous wave modulation. The method includes the steps: transmitting a trapezoid linear frequency modulation continuous wave signal by a radar target, and receiving a target echo signal to generate digital differential signal; calculating an upper frequency band scanning spectrum peak, a constant-frequency spectrum peak and a lower frequency band scanning spectrum peak, combining pairwise the upper frequency band scanning spectrum peak and the lower frequency band scanning spectrum peak to obtain two spectrum peak combinations, calculating corresponding frequency and magnitude differences, and performing arrangement according to an ascending sequence of the magnitude differences to obtain a sequence; marking a three-spectrum peak combination meeting a first frequency matching condition according to a frequency priority principle; marking a three-spectrum peak combination meeting a second frequency matching condition according to a frequency priority principle if an unsuccessfully-matched constant-frequency spectrum peak exists; marking L-P pairs of three-spectrum peak combinations meeting the second frequency matching conditions according to an amplitude information priority principle if P is not equal to L; and calculating a target distance estimation value and speed estimation value.

US 10,036,805 B2 describes a method and an apparatus for detecting a surrounding environment based on a Continuous Wave radar sensing signal and a Frequency-Modulated Continuous Wave radar sensing signal. The method includes sending, by a radar, the Continuous Wave radar sensing signal for detecting the target and receiving a first response signal that is a response to the Continuous Wave radar sensing signal; sending, by the radar, the Frequency-Modulated Continuous Wave radar sensing signal for detecting the target and receiving a second response signal that is a response to the Frequency-Modulated Continuous Wave radar sensing signal; generating, by the radar, the frequency spectrum of a beat signal by performing signal processing on the first response signal and the second response signal.

## SUMMARY

In view of at least one problem in the prior art, the present invention relates to a method according to claim 1 and a lidar according to claim 7. Claims 2 to 6 refer to specifically advantageous realizations of the method according to claim 1. Claims 8 to 13 refer to specifically advantageous realizations of the lidar according to claim 7.

An aspect of the present disclosure provides a method of performing detection using a frequency modulated continuous wave (FMCW), including:

S11: transmitting a detection wave according to a preset frequency sweep waveform to detect a target object;
S12: receiving an echo of the detection wave reflected from the target object; and
S13: obtaining a distance to and/or a speed of the target object according to the echo and the detection wave, where
one cycle of the preset frequency sweep waveform consists of a rising edge, a horizontal region, and a falling edge.

According to an aspect of the present disclosure, the horizontal region is connected to the rising edge and the falling edge during one cycle of the preset frequency sweep waveform.

According to an aspect of the present disclosure, the horizontal region is separated from the rising edge and the falling edge during one cycle of the preset frequency sweep waveform.

According to an aspect of the present disclosure, step S13 includes:

S131: determining whether an amplitude corresponding to a frequency $f_d$ of a beating signal between the detection wave and the echo in the horizontal region is greater than or equal to an amplitude threshold;
S132: calculating a distance frequency shift component $f_z$ and a speed frequency shift component $f_v$ according to a preset manner depending on whether the amplitude corresponding to the frequency $f_d$ of the beating signal between the detection wave and the echo in the horizontal region is greater than or equal to the amplitude threshold; and
S133: calculating the distance to and the speed of the target object according to the distance frequency shift component $f_z$ and the speed frequency shift component $f_v$.

According to an aspect of the present disclosure, step S132 includes:

determining which of $|f_2 + f_1|/2$ and $|f_2 - f_1|/2$ is closer to $f_d$ when the amplitude corresponding to the frequency $f_d$ of the beating signal between the detection wave and the echo in the horizontal region is greater than or equal to the amplitude threshold, where $f_1$ is an absolute value of a frequency difference between the detection wave and the echo in a range of the rising edge, and $f_2$ is an absolute value of a frequency difference between the detection wave and the echo in a range of the falling edge;
calculating the distance frequency shift component $f_z$ and the speed frequency shift component $f_v$ in the following manner when $|f_2 - f_1|/2$ is closer to $f_d$:

$$f_z = \frac{f_2 + f_1}{2} \text{, and} \quad f_v = \frac{f_2 - f_1}{2} \text{; and}$$

calculating the distance frequency shift component $f_z$ and the speed frequency shift component $f_v$ in the following manner when $|f_2 + f_1|/2$ is closer to $f_d$: if $f_1 > f_2$,

$$f_z = \left| \frac{f_2 - f_1}{2} \right| \text{, then} \quad f_v = -\frac{f_2 + f_1}{2} \text{;}$$

and if $f_1 < f_2$,

$$f_z = \left| \frac{f_2 - f_1}{2} \right| \text{, then}$$

$$f_v = \frac{f_2 + f_1}{2} \text{.}$$

According to an aspect of the present disclosure, the method further includes:

determining the presence of multiple echoes when a number of absolute values $f_1$ of the frequency difference in a range of the rising edge and/or a number of absolute values $f_2$ of the frequency difference in a range of the falling edge is greater than 1; and performing echo matching when the multiple echoes exist, and retaining one $f_1$ in the range of the rising edge and one $f_2$ in the range of the falling edge.

According to an aspect of the present disclosure, the echo matching is performed in the following manner when the multiple echoes exist: selecting a group of $f_1$ and $f_2$ satisfying $$f_d = \left| \frac{f_2 + f_1}{2} \right|$$ or $$f_d = \left| \frac{f_2 - f_1}{2} \right|,$$ and discarding other $f_1$ and $f_2$.

According to an aspect of the present disclosure, step S103 includes: calculating the distance frequency shift component $f_z$ and the speed frequency shift component $f_v$ in the following manner when the amplitude corresponding to the frequency $f_d$ of the beating signal between the detection wave and the echo in the horizontal region is less than the amplitude threshold: $$f_z = \frac{f_2 + f_1}{2}, \text{ and } f_v = \frac{f_2 - f_1}{2}.$$

According to an aspect of the present disclosure, the method further includes:

determining a presence of multiple echoes when a number of absolute values $f_1$ of the frequency difference in the range of the rising edge and/or a number of absolute values $f_2$ of the frequency difference in the range of the falling edge is greater than 1; and performing echo matching when the multiple echoes exist, and retaining one $f_1$ in the range of the rising edge and one $f_2$ in the range of the falling edge.

According to an aspect of the present disclosure, the echo matching is performed in the following manner when the multiple echoes exist:

determining a generated frequency shift F based on a moving speed of a device transmitting the detection wave; and

selecting a group of $f_1$ and $f_2$ with $\dfrac{f_2 - f_1}{2}$ closest to F, and discarding other $f_1$ and $f_2$.

The present disclosure further provides a lidar, including:

a transmitting unit, configured to transmit a detection wave according to a preset frequency sweep waveform, where one cycle of the preset frequency sweep waveform consists of a rising edge, a horizontal region, and a falling edge;
a sweeping unit, configured to receive and reflect and transmit the detection wave to detect a target object;
a receiving unit, where an echo of the detection wave reflected from the target object is reflected by the sweeping unit and then incident onto the receiving unit; and
a processing unit, coupled to the transmitting unit and the receiving unit and configured to obtain a distance to and/or a speed of the target object according to the echo and the detection wave.

According to an aspect of the present disclosure, the horizontal region is connected to the rising edge and the falling edge during one cycle of the preset frequency sweep waveform.

According to an aspect of the present disclosure, the horizontal region is separated from the rising edge and the falling edge during one cycle of the preset frequency sweep waveform.

According to an aspect of the present disclosure, the processing unit is configured to:

determine whether an amplitude corresponding to a frequency $f_d$ of a beating signal between the detection wave and the echo in the horizontal region is greater than or equal to an amplitude threshold;
calculate a distance frequency shift component $f_z$ and a speed frequency shift component $f_v$ according to a preset manner depending on whether the amplitude corresponding to the frequency $f_d$ of the beating signal between the detection wave and the echo in the horizontal region is greater than or equal to the amplitude threshold; and
calculate the distance to and the speed of the target object according to the distance frequency shift component $f_z$ and the speed frequency shift component $f_v$.

According to an aspect of the present disclosure, the processing unit is configured to:

determine which of $|f_2 + f_1|/2$ and $|f_2 - f_1|/2$ is closer to $f_d$ when the amplitude corresponding to the frequency $f_d$ of the beating signal between the detection wave and the echo in the horizontal region is greater than or equal to the amplitude threshold, where $f_1$ is an absolute value of a frequency difference between the detection wave and the echo in a range of the rising edge, and $f_2$ is an absolute value of a frequency difference between the detection wave and the echo in a range of the falling edge;
calculate the distance frequency shift component $f_z$

and the speed frequency shift component $f_v$ in the following manner when $|f_2 - f_1|/2$ is closer to $f_d$:

$$f_z = \frac{f_2 + f_1}{2}, \text{ and } f_v = \frac{f_2 - f_1}{2}; \text{ and}$$

calculate the distance frequency shift component $f_z$ and the speed frequency shift component $f_v$ in the following manner when $|f_2 + f_1|/2$ is closer to $f_d$: if $f_1 > f_2$,

$$f_z = \left| \frac{f_2 - f_1}{2} \right|, \text{ then } f_v = -\frac{f_2 + f_1}{2};$$

and if $f_1 < f_2$,

$$f_z = \left| \frac{f_2 - f_1}{2} \right|, \text{ then}$$

$$f_v = \frac{f_2 + f_1}{2}.$$

According to an aspect of the present disclosure, the processing unit is configured to:

determine the presence of multiple echoes when a number of absolute values $f_1$ of the frequency difference in a range of the rising edge and/or a number of absolute values $f_2$ of the frequency difference in a range of the falling edge is greater than 1; and perform echo matching when the multiple echoes exist, and retain one $f_1$ in the range of the rising edge and one $f_2$ in the range of the falling edge.

According to an aspect of the present disclosure, the processing unit is configured to perform the echo matching in the following manner when the multiple echoes exist: selecting a group of $f_1$ and $f_2$ satisfying

$$f_d = \left| \frac{f_2 + f_1}{2} \right| \text{ or } f_d = \left| \frac{f_2 - f_1}{2} \right|, \text{ and discard-}$$

ing other $f_1$ and $f_2$.

According to an aspect of the present disclosure, the processing unit is configured to calculate the distance frequency shift component $f_z$ and the speed frequency shift component $f_v$ in the following manner when the amplitude corresponding to the frequency $f_d$ of the beating signal between the detection wave and the echo in the horizontal region is less than the amplitude threshold:

$$f_z = \frac{f_2 + f_1}{2}, \text{ and } f_v = \frac{f_2 - f_1}{2}.$$

According to an aspect of the present disclosure, the processing unit is configured to:

determine a presence of multiple echoes when a number of absolute values $f_1$ of the frequency difference in a range of the rising edge and/or a number of absolute values $f_2$ of the frequency difference in a range of the falling edge is greater than 1; and perform echo matching when the multiple echoes exist, and retain one $f_1$ in the range of the rising edge and one $f_2$ in the range of the falling edge.

According to an aspect of the present disclosure, the processing unit is configured to perform the echo matching in the following manner when the multiple of echoes exist:

determining a generated frequency shift F based on a moving speed of a device transmitting the detection wave; and

selecting a group of $f_1$ and $f_2$ with $\frac{f_2 - f_1}{2}$ closest to F, and discarding other $f_1$ and $f_2$.

The present disclosure is intended to resolve a problem that a current FMCW lidar based on triangular wave frequency sweep has demodulation errors and cannot measure high-speed objects in short range, as well as the multi-echo problem of the FMCW lidar.

## BRIEF DESCRIPTION OF THE DRAWINGS

The drawings forming a part of the present disclosure are used to provide a further understanding of the present disclosure, and the exemplary embodiments and description of the present disclosure are used to explain the present disclosure but do not constitute an improper limitation on the present disclosure. In the drawings:

FIG. 1 is a structural diagram of a frequency modulated continuous wave (FMCW) radar;
FIG. 2 is a schematic diagram showing an effective beating region and an ineffective beating region in the FMCW radar in FIG. 1;
FIG. 3A shows a detection wave and an echo of a triangular wave frequency sweep without considering a Doppler frequency shift;
FIG. 3B shows a detection wave and an echo of a triangular wave frequency sweep considering a Doppler frequency shift;
FIG. 4 shows possible demodulation errors when detecting a high-speed object in short range through a triangular wave frequency sweep;
FIG. 5 shows a method of performing detection using an FMCW according to an embodiment of the present disclosure;
FIG. 6A is a schematic diagram of a preset frequency sweep waveform according to an embodiment of the present disclosure;
FIG. 6B is a schematic diagram of a preset frequency sweep waveform according to another embodiment of the present disclosure;

FIG. 6C is a schematic diagram of a preset frequency sweep waveform according to yet another embodiment of the present disclosure;

FIG. 7 is a schematic diagram of a frequency and a corresponding amplitude of a beating signal between a detection wave and an echo in a horizontal region according to an embodiment of the present disclosure;

FIG. 8, FIG. 9, and FIG. 10 show detection waves and echoes in three cases respectively, according to an embodiment of the present disclosure;

FIG. 11 is a schematic diagram of multi-echo matching according to an embodiment of the present disclosure; and

FIG. 12 is a schematic diagram of a lidar according to an embodiment of the present disclosure.

## DETAILED DESCRIPTION

Only some exemplary embodiments are briefly described below. As a person skilled in the art can realize, the described embodiments may be modified in various ways without departing from the scope of the present invention as defined by the independent claims. Therefore, the drawings and the description are to be considered as illustrative in nature but not restrictive.

In the description of the present disclosure, it should be understood that directions or position relationships indicted by terms such as "center", "longitudinal", "transverse", "length", "width", "thickness", "upper", "lower", "front", "rear", "left", "right", "vertical", "horizontal", "top", "bottom", "interior", "exterior", "clockwise", and "counterclockwise" are based on orientation or position relationships shown in the drawings, are merely used for facilitating the description of the present disclosure and simplify the description, instead of indicating or implying that the indicated apparatus or element needs to have particular orientations or be constructed and operated in particular orientations, and therefore, cannot be construed as a limitation on the present disclosure. Furthermore, the terms "first" and "second" are merely used for descriptive purpose, and should not be interpreted as indicating or implying relative significance or implicitly indicating a quantity of the indicated technical features. Thus, features defined by "first" or "second" may explicitly or implicitly include one or more features. In the description of the present disclosure, unless otherwise explicitly specified, "multiple" means two or more than two.

In the description of the present disclosure, it should be noted that unless otherwise explicitly specified or defined, terms such as "mount", "couple", and "connect" should be understood in a broad sense, for example, a fixed connection, a detachable connection; or an integral connection, or a mechanical connection, or an electrical connection or communication with each other; or a direct connection, an indirect connection through an intermediate medium, internal communication between two elements, or an interaction relationship between two elements. A person of ordinary skill in the art may understand the specific meanings of the above terms in the present disclosure according to specific situations.

In the present disclosure, unless otherwise explicitly specified and defined, a first feature being "over" or "below" a second feature may mean that the first feature and the second feature are in direct contact, or the first feature and the second feature are not in direct contact but are in contact through another feature therebetween. Moreover, the first feature being "over", "above", and "on" the second feature includes that the first feature is directly above or obliquely above the second feature, or merely means that the first feature has a greater horizontal height than the second feature. The first feature being "under", "below", and "underneath" the second feature includes that the first feature is directly above or obliquely above the second feature, or merely means that the first feature has a smaller horizontal height than the second feature.

The following disclosure provides many different embodiments or examples for achieving different structures of the present disclosure. In order to simplify the disclosure of the present disclosure, components and settings of specific examples are described below. Certainly, they are merely examples, and are not intended to limit the present disclosure. In addition, the present disclosure may repeat reference numerals and/or reference letters in different examples. The repetition is for purpose of simplification and clarity, but does not indicate any relationship between the various implementations and/or settings discussed. Moreover, the present disclosure provides examples of various particular processes and materials, but a person of ordinary skill in the art may realize the application of other processes and/or the use of other materials.

Preferred embodiments of the present disclosure are described below with reference to the drawings. It should be understood that the preferred embodiments described herein are merely used for illustrating and explaining the present disclosure and are not used for limiting the present disclosure.

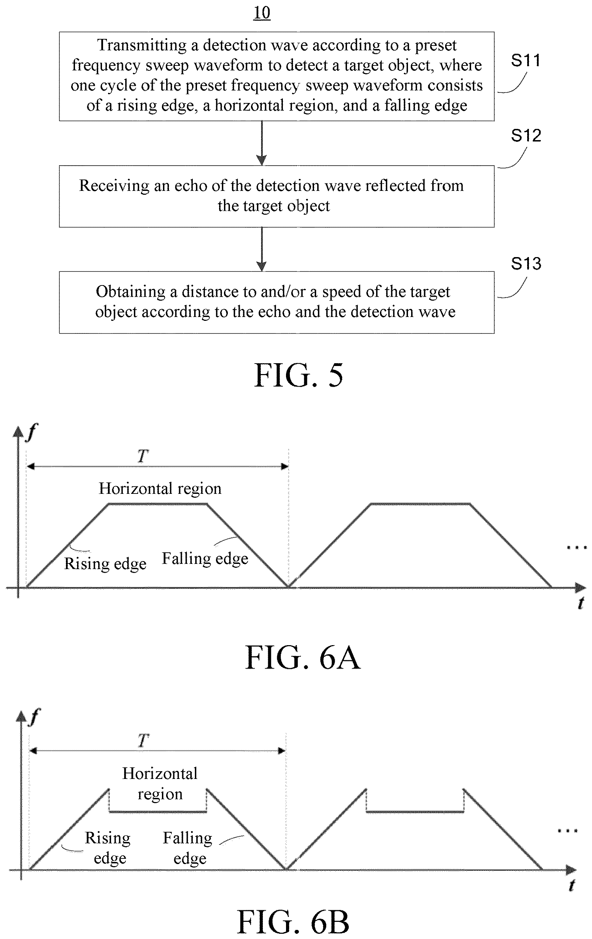

FIG. 5 shows a method 10 for performing detection using a frequency modulated continuous wave (FMCW) according to an embodiment of the present disclosure. Detailed description is provided below with reference to the drawings.

Step S11: Transmitting a detection wave according to a preset frequency sweep waveform to detect a target object, where one cycle of the preset frequency sweep waveform consists of a rising edge, a horizontal region, and a falling edge.

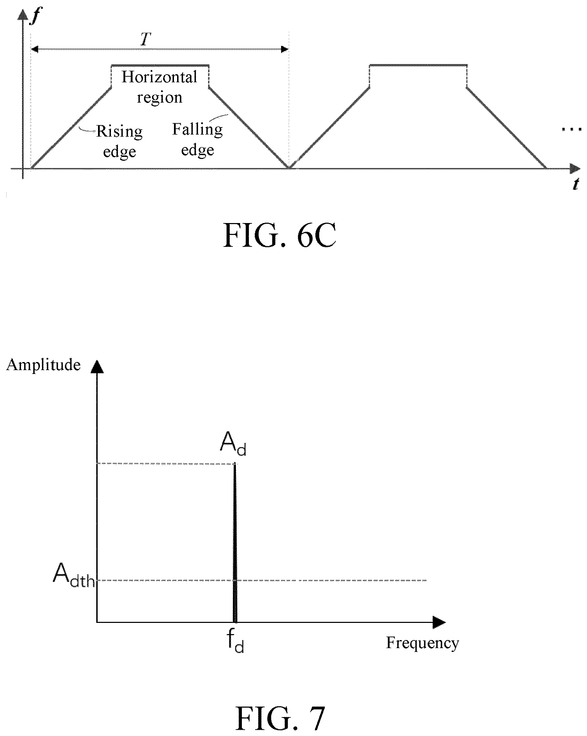

FIG. 6A is a schematic diagram of a preset frequency sweep waveform according to an embodiment of the present disclosure. As shown in FIG. 6A, one cycle T of the preset frequency sweep waveform includes three stages, namely, a rising edge, a horizontal region, and a falling edge. In the preset frequency sweep waveform in FIG. 6A, the horizontal region is connected to the rising edge and the falling edge, i.e., the frequency value of the horizontal region is substantially equal to the maximum frequency values of the rising edge and the falling edge. FIG. 6B is a schematic diagram of a preset frequency sweep waveform according to another embodiment of the present disclosure. As shown in FIG. 6B, a horizontal region is separated from a rising edge and a falling edge. In the figure, a frequency value of the horizontal region is different from the maximum frequency values of the rising edge and the falling edge. Moreover, the maximum frequency values of the rising edge and the falling edge may be the same or different. FIG. 6B only shows a case in which the maximum frequency values are substantially the same. Alternately, the horizontal region may be located above the rising edge and the falling edge, as shown in FIG. 6C. This falls within the scope of the present disclosure.

The present disclosure may adopt the preset frequency sweep waveforms shown in FIG. 6A, FIG. 6B, and FIG. 6C. Demodulation manners of the three preset frequency sweep waveforms are substantially the same. The preset frequency sweep waveform shown in FIG. 6A is described below as an example.

Step S12: Receiving an echo of the detection wave reflected from the target object. After being transmitted according to the preset frequency sweep waveform, the detection wave is diffusely reflected from the target object, and partial echoes return, which are received by a detection device and converted to electrical signals.

Step S13: Obtaining a distance to and/or a speed of the target object according to the echo and the detection wave. That is to say, a frequency and a corresponding amplitude of a beating signal between the echo and the detection wave in each of the sections is obtained through Fast Fourier transform (FFT), and then the distance to and/or the speed of the target object are obtained based on the frequency of the beating signal. In the present disclosure, a three-stage waveform frequency sweep, including the rising edge, the horizontal region, and the falling edge is used, and the three stages form one cycle, to resolve a problem of erroneous determination and/or multi-echo matching caused by a reversal of a frequency of an echo (relative to a detection wave) of a high-speed object in short range. A demodulation process according to a preferred embodiment of the present disclosure is described in detail below.

According to an aspect of the present disclosure, step S13 includes:

Step S131: Determining whether an amplitude corresponding to a frequency $f_d$ of a beating signal between the detection wave and the echo in the horizontal region is greater than or equal to an amplitude threshold.

A frequency-time waveform of the echo is usually the same as or close to a frequency-time waveform of the detection wave. In the present disclosure, since the frequency sweep waveform of the detection wave includes the rising edge, the horizontal region, and the falling edge, a frequency waveform of the echo includes a rising edge, a horizontal region, and a falling edge. FIG. 7 shows the frequency sweep waveform of the detection wave and the frequency waveform of the echo. After the echo is received, beating is performed on the echo and the detection wave, to obtain frequencies and corresponding amplitudes of the beating signal between the echo and the detection wave at the rising edge, the horizontal region, and the falling edge through transformation, and then the frequency $f_d$ of the beating signal in the horizontal region and a corresponding amplitude are read. The frequency $f_d$ of the beating signal in the horizontal region is an absolute value of a frequency difference between the detection wave and the echo in the horizontal region. It is then determined whether the amplitude corresponding to the frequency $f_d$ of the beating signal in the horizontal region is greater than or equal to the amplitude threshold.

In the present disclosure, the frequency $f_d$ of the beating signal between the detection wave and the echo in the horizontal region is closely related to a speed frequency shift component $f_v$ having the same absolute value. However, $f_d$ is always positive, and $f_v$ may be positive or negative depending on a directivity. Step S132: Calculating a distance frequency shift component $f_z$ and a speed frequency shift component $f_v$ according to a preset manner depending on whether the amplitude corresponding to the frequency $f_d$ of the beating signal between the detection wave and the echo in the horizontal region is greater than or equal to the amplitude threshold. A calculation manner according to a preferred embodiment of the present disclosure is described below.

FIG. 7 is a schematic diagram of a frequency and a corresponding amplitude of a beating signal between a detection wave and an echo in a horizontal region. In the figure, a corresponding amplitude of the frequency $f_d$ of the beating signal between the detection wave and the echo in the horizontal region is $A_d$, and an amplitude threshold is $A_{dth}$. In the figure, $A_d$ is greater than $A_{dth}$. The amplitude threshold is determined according to a noise amplitude when no echo exists. For example, $A_{dth}$ is 6 times the noise amplitude when no echo exists, or $A_{dth}$ may be set according to an actual situation.

It is determined which of $|f_2 + f_1|/2$ and $|f_2 - f_1|/2$ is closer to $f_d$ when the amplitude corresponding to the frequency $f_d$ of the beating signal between the detection wave and the echo in the horizontal region is greater than or equal to the amplitude threshold. $f_1$ is an absolute value of a frequency difference between the detection wave and the echo in a range of the rising edge, and $f_2$ is an absolute value of a frequency difference between the detection wave and the echo in a range of the falling edge.

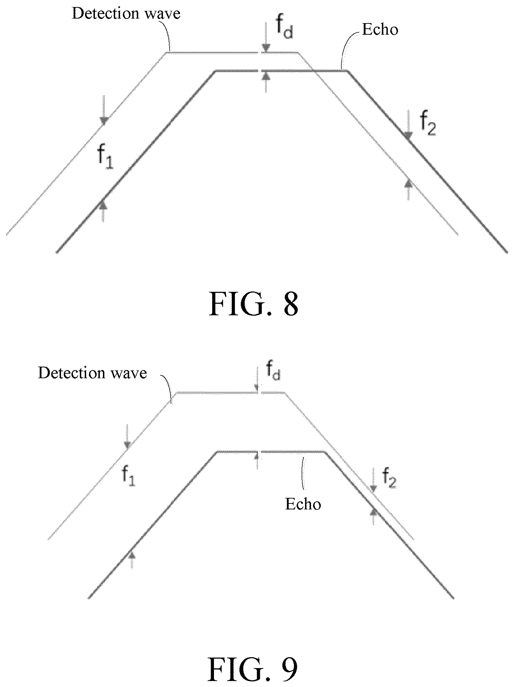

When $|f_2 - f_1|/2$ is closer to $f_d$, for example, when $|f_2 - f_1|/2 \approx f_d$, it indicates that $|f_Z| > |f_v|$, which represents that at this time no change in frequency sign occurs at the rising edge and the falling edge (i.e., at the rising edge, the echo is located below the detection wave; and at the falling edge, the echo is located above the detection wave), and a Doppler frequency shift (a speed frequency shift component) exists, but the speed frequency shift component $f_v$ is smaller than the distance frequency shift component $f_z$. Frequencies of the detection wave and the echo are shown in FIG. 8. Therefore, the distance frequency shift component $f_z$ and the speed frequency shift component $f_v$ are calculated in the following manner:

$$f_z = \frac{f_2 + f_1}{2}, \text{ and } f_v = \frac{f_2 - f_1}{2}.$$

When $|f_2 + f_1|/2$ is closer to $f_d$, for example, when $|f_2 + f_1|/2 \approx f_d$, it indicates that $|f_z| < |f_v|$, and the distance frequency shift component $f_z$ and the speed frequency shift component $f_v$ are calculated in the following manner: If $f_1 > f_2$, a Doppler frequency shift exists, but the speed frequency shift component $f_v$ is greater than the distance frequency shift component $f_z$, and the speed frequency shift component $f_v$ is negative. Frequencies of the detection wave and the echo are shown in FIG. 9 (at the rising edge, the echo is located below the detection wave; and at the falling edge, the echo is located below the detection wave, a reversal occurs at the falling edge). In this case,

$$f_z = \left|\frac{f_2 - f_1}{2}\right|, \text{ and } f_v = -\frac{f_2 + f_1}{2}. \text{ If } f_1 < f_2, \text{ a}$$

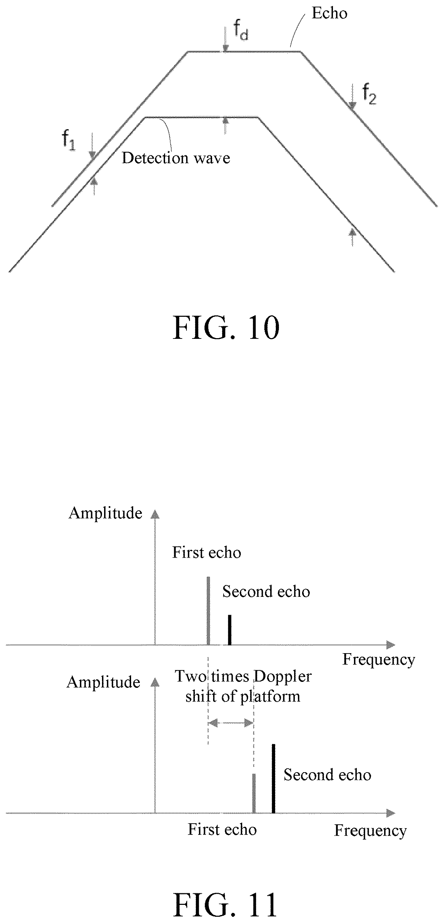

Doppler frequency shift exists, but the speed frequency shift component $f_v$ is greater than the distance frequency shift component $f_z$, and the speed frequency shift component $f_v$ is positive. Frequencies of the detection wave and the echo are shown in FIG. 10 (at the rising edge, the echo is located above the detection wave, a reversal occurs at the rising edge; and at the falling edge, the echo is located above the detection wave). In this case,

$$f_z = \left|\frac{f_2 - f_1}{2}\right|, \text{ and } f_v = \frac{f_2 + f_1}{2}.$$

According to an aspect of the present disclosure, step S132 includes: When the amplitude corresponding to the frequency $f_d$ of the beating signal between the detection wave and the echo in the horizontal region is less than the amplitude threshold, that is, $A_d$ is less than $A_{dth}$, it may be considered that no $f_d$ exists. Such situation is usually caused by a long distance, a small echo signal, or an excessively small moving speed. In this case, the distance frequency shift component $f_z$ and the speed frequency shift component $f_v$ may be calculated in the following manner: $f_z = \frac{f_2 + f_1}{2}$, and

$$f_v = \frac{f_2 - f_1}{2}.$$

Step S133: Calculating the distance to and the speed of the target object according to the distance frequency shift component $f_z$ and the speed frequency shift component $f_v$. After the distance frequency shift component $f_z$ and the speed frequency shift component $f_v$ are obtained, the distance to and the speed of the target object may be respectively calculated. In a lidar system, a distance coefficient factor_z and a speed coefficient factor_v are initial calibration values. After obtaining the distance frequency shift component $f_z$ and the speed frequency shift component $f_v$, they may be respectively multiplied by the distance coefficient factor_z and the speed coefficient factor_v to calculate the distance to and the speed of the target object.

FIG. 8, FIG. 9, and FIG. 10 only show a frequency waveform of one echo. During lidar detection, if a vibrating mirror sweeps excessively fast at an edge of an object, frequency waveforms of multiple echoes appear, and the beating signals in the rising edge and the falling edge include different measured objects at front and rear. If the vibrating mirror sweeps excessively slow at the edge of the target object, the beating signals in the rising edge and the falling edge may carry reflection information of various objects at front and rear, and therefore correct matching is required.

According to an embodiment of the present disclosure, it may be determined whether multiple echoes exist, and matching is performed when the multiple echoes exist, i.e., a group of f1 and f2 in the range of the rising edge and the range of the falling edge matching each other is retained. For example, when the amplitude corresponding to the frequency $f_d$ of the beating signal between the detection wave and the echo in the horizontal region is greater than or equal to the amplitude threshold, if a number of absolute values $f_1$ of the frequency difference in the range of the rising edge or a number of absolute values $f_2$ of the frequency difference in the range of the falling edge is greater than 1, it is considered that multiple echoes exist (for example, as shown in FIG. 4), and matching is required. At this time, a group of $f_1$ and $f_2$

satisfying $f_d = \left|\frac{f_2 + f_1}{2}\right|$ or $f_d = \left|\frac{f_2 - f_1}{2}\right|$ is sought. It is considered that $f_1$ and $f_2$ are a matching pair. $f_1$ and $f_2$ satisfying the above condition are retained, and other $f_1$ and $f_2$ are discarded. FIG. 11 is a schematic diagram of multi-echo matching. An upper part shows a beating spectrum at the rising edge, and a lower part shows a beating spectrum at the falling edge. As shown in FIG. 11, two $f_1$ are generated at the rising edge and two $f_2$ are generated at the falling edge. Through the above matching, a first echo at the rising edge and a first echo at the falling edge satisfy the above matching relationship and are retained. Other echoes are discarded and used in subsequent data processing.

When the amplitude corresponding to the frequency $f_d$ of the beating signal between the detection wave and the echo in the horizontal region is smaller than the amplitude threshold, and the number of the absolute values $f_1$ of the frequency difference in the range of the rising edge and/or the number of the absolute values $f_2$ of

the frequency difference in the range of the falling edge is greater than 1, a generated frequency shift F may be determined based on a moving speed of a device transmitting the detection wave, and then a group of $f_1$ and $f_2$ with $\dfrac{f_2 - f_1}{2}$ closest to F is selected, and other $f_1$ and $f_2$ are discarded. In this case, if a frequency shift generated by a relative speed of a surrounding object due to advancement of a vehicle is F, F may be obtained through a speed sensor of the vehicle or through real-time analysis of the speed of the surrounding object. Based on a multi-echo matching of the speed, an echo signal from a stationary object is preferentially selected in the multiple echoes.

Therefore, when multiple echoes exist, a matching may be performed in the above manner, to retain a group of $f_1$ and $f_2$, and then the distance frequency shift component $f_z$ and the speed frequency shift component $f_v$ are calculated in the following manner:

$$f_z = \frac{f_2 + f_1}{2}, \text{ and } f_v = \frac{f_2 - f_1}{2}.$$

In the above-described embodiment of the present disclosure, three-stage periodic waveform frequency sweep is performed, which can resolve the existing problem of erroneous modulation in measurement of high-speed objects in short range and the problem of a failure of matching the multiple echoes caused by triangular wave frequency sweep.

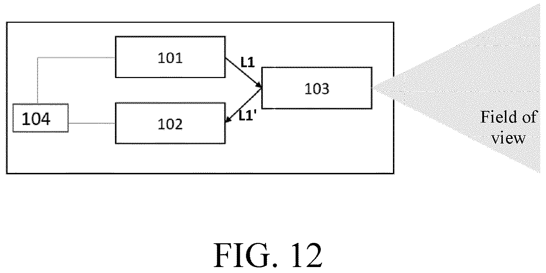

FIG. 12 shows a lidar 100 according to an embodiment of the present disclosure. The lidar is applicable to the above-mentioned method 10. Detailed description is provided below with reference to the drawings.

As shown in FIG. 12, the lidar 100 includes a transmitting unit 101, a receiving unit 102, a sweeping unit 103, and a processing unit 104. The transmitting unit 101 is configured to transmit a detection wave L1 according to a preset frequency sweep waveform, where one cycle of the preset frequency sweep waveform consists of a rising edge, a horizontal region, and a falling edge, as shown in FIG. 6A, FIG. 6B, and FIG. 6C. The detection wave L1 is incident onto the sweeping unit 103. The sweeping unit 103 may include a vibrating mirror or a rotating mirror. The detection wave L1 is reflected in different directions through swinging or rotation and then transmitted into a surrounding space. The detection wave covers a field of view of the lidar, and is used for detecting a target object OB. The detection wave L1 is diffusely reflected from the target object, and an echo L1' returns to the lidar 100, and may be received by the sweeping unit 103 and reflected to the receiving unit 102. The receiving unit 102 includes a photoelectric detector configured to receive the echo L1' of the detection wave L1 reflected from the target object OB and to convert the echo to an electrical signal. The transmitting unit 101 and the receiving unit 102 further include, for example, a beam shaping unit, such as a collimating unit shown in FIG. 1, for collimating an emergent detection wave or an echo. The processing unit 103 is coupled to the transmitting unit 101 and the receiving unit 102. The processing unit 103 is configured to obtain a distance to and/or a speed of the target object according to the echo L1' and the detection wave L1. A person skilled in the art may easily understand that FIG. 12 shows a functional block diagram rather than an actual structure diagram of the lidar 100. The lidar 100 may preferably adopt the FMCW lidar structure shown in FIG. 1, in which the transmitting unit 101 may include a laser device and a signal generating unit, such as a DAC that generates a modulated waveform. The laser device is configured to transmit a laser beam, and the signal generating unit is configured to generate a preset frequency sweep waveform, and then modulate the laser beam by using the preset frequency sweep waveform to generate the detection wave L1. The receiving unit 102 may include a vibrating mirror and a collimating unit shown in FIG. 1. The vibrating mirror is configured to receive the echo L1' and reflect the echo onto the collimating unit, and the collimating unit converges the echo L1'. The processing unit 103 performs calculation and processing according to the detection wave L1 and the echo L1'.

According to an aspect of the present disclosure, the horizontal region is connected to the rising edge and the falling edge during one cycle of the preset frequency sweep waveform, as shown in the waveform in FIG. 6A. Alternatively, the horizontal region is separated from the rising edge and the falling edge, as shown in the waveforms in FIG. 6B and FIG. 6C.

According to an aspect of the present disclosure, the processing unit is configured to:

determine whether an amplitude corresponding to a frequency $f_d$ of a beating signal between the detection wave and the echo in the horizontal region is greater than or equal to an amplitude threshold;
calculate a distance frequency shift component $f_z$ and a speed frequency shift component $f_v$ according to a preset manner depending on whether the amplitude corresponding to the frequency $f_d$ of the beating signal between the detection wave and the echo in the horizontal region is greater than or equal to the amplitude threshold; and
calculate the distance to and the speed of the target object according to the distance frequency shift component $f_z$ and the speed frequency shift component $f_v$.

According to an aspect of the present disclosure, the processing unit is configured to:

determine which of $|f_2 + f_1|/2$ and $|f_2 - f_1|/2$ is closer to $f_d$ when the amplitude corresponding to the frequency $f_d$ of the beating signal between the detection wave and the echo in the horizontal region is greater than or equal to the amplitude threshold, where $f_1$ is an absolute value of a frequency difference between the detection wave and the echo in a range of the rising edge, and $f_2$ is an absolute value of a frequency difference between the detection wave and the echo in a range of the falling edge; calculate the distance frequency shift component $f_z$ and the speed frequency shift component $f_v$ in the following manner when $|f_2 - f_1|/2$ is closer to $f_d$:

$$f_z = \frac{f_2 + f_1}{2} \text{ , and } \quad f_v = \frac{f_2 - f_1}{2} \text{ ; and}$$

calculate the distance frequency shift component $f_z$ and the speed frequency shift component $f_v$ in the following manner when $|f_2 + f_1|/2$ is closer to $f_d$: if $f_1 > f_2$,

$$f_z = \left| \frac{f_2 - f_1}{2} \right| \text{ , then } \quad f_v = -\frac{f_2 + f_1}{2} \text{ ;}$$

and if $f_1 < f_2$,

$$f_z = \left| \frac{f_2 - f_1}{2} \right| \text{ , then}$$

$$f_v = \frac{f_2 + f_1}{2} \text{ .}$$

According to an aspect of the present disclosure, the processing unit is configured to:

determine the presence of multiple echoes when a number of absolute values $f_1$ of the frequency difference in a range of the rising edge and/or a number of absolute values $f_2$ of the frequency difference in a range of the falling edge is greater than 1; and perform echo matching when the multiple echoes exist, and retain one $f_1$ in the range of the rising edge and one $f_2$ in the range of the falling edge.

According to an aspect of the present disclosure, the processing unit is configured to perform the echo matching in the following manner when the multiple echoes exist: selecting a group of $f_1$ and $f_2$ satisfying

$$f_d = \left| \frac{f_2 + f_1}{2} \right| \text{ or } \quad f_d = \left| \frac{f_2 - f_1}{2} \right| \text{ , and discarding other } f_1 \text{ and } f_2.$$

According to an aspect of the present disclosure, the processing unit is configured to calculate the distance frequency shift component $f_z$ and the speed frequency shift component $f_v$ in the following manner when the amplitude corresponding to the frequency $f_d$ of the beating signal between the detection wave and the echo in the horizontal region is less than the amplitude threshold:

$$f_z = \frac{f_2 + f_1}{2} \text{ , and } \quad f_v = \frac{f_2 - f_1}{2} \text{ .}$$

According to an aspect of the present disclosure, the processing unit is configured to:

determine a presence of multiple echoes when a number of absolute values $f_1$ of the frequency difference in a range of the rising edge and/or a number of absolute values $f_2$ of the frequency difference in a range of the falling edge is greater than 1; and perform echo matching when the multiple echoes exist, and retain one $f_1$ in the range of the rising edge and one $f_2$ in the range of the falling edge.

According to an aspect of the present disclosure, the processing unit is configured to perform the echo matching in the following manner when the multiple echoes exist:

determining a generated frequency shift F based on a moving speed of a device transmitting the detection wave; and

selecting a group of $f_1$ and $f_2$ with $\dfrac{f_2 - f_1}{2}$ closest to F, and discarding other $f_1$ and $f_2$.

**Claims**

1. A method (10) of performing detection using a frequency modulated continuous wave (FMCW), comprising:

   S11: transmitting a detection wave according to a preset frequency sweep waveform to detect a target object;
   S12: receiving an echo of the detection wave reflected from the target object; and
   S13: obtaining a distance to and/or a speed of the target object according to the echo and the detection wave, wherein
   one cycle of the preset frequency sweep waveform consists of a rising edge, a horizontal region, and a falling edge;
   **characterized in that** step S13 comprises:

   S131: determining whether an amplitude corresponding to a frequency $f_d$ of a beating signal between the detection wave and the echo in the horizontal region is greater than or equal to an amplitude threshold;
   S132: calculating a distance frequency shift component $f_z$ and a speed frequency shift component $f_v$ according to a preset manner depending on whether the amplitude corresponding to the frequency $f_d$ of the beating signal between the detection wave and the echo in the horizontal region is greater than or equal to the amplitude threshold; and

S133: calculating the distance to and the speed of the target object according to the distance frequency shift component $f_z$ and the speed frequency shift component $f_v$.

2. The method (10) according to claim 1, wherein the horizontal region is connected to the rising edge and the falling edge during one cycle of the preset frequency sweep waveform,

or

wherein the horizontal region is separated from the rising edge and the falling edge during one cycle of the preset frequency sweep waveform.

3. The method (10) according to claim 1, wherein step S132 comprises:

determining which of $|f_2 + f_1|/2$ and $|f_2 - f_1|/2$ is closer to $f_d$ when the amplitude corresponding to the frequency $f_d$ of the beating signal between the detection wave and the echo in the horizontal region is greater than or equal to the amplitude threshold, wherein $f_1$ is an absolute value of a frequency difference between the detection wave and the echo in a range of the rising edge, and $f_2$ is an absolute value of a frequency difference between the detection wave and the echo in a range of the falling edge;

calculating the distance frequency shift component $f_z$ and the speed frequency shift component $f_v$ in the following manner when $|f_2 - f_1|/2$ is closer to $f_d$:

$$f_z = \frac{f_2 + f_1}{2}, \text{ and } f_v = \frac{f_2 - f_1}{2};$$

and

calculating the distance frequency shift component $f_z$ and the speed frequency shift component $f_v$ in the following manner when $|f_2 + f_1|/2$ is closer to $f_d$: if $f_1 > f_2$,

$$f_z = \left|\frac{f_2 - f_1}{2}\right|, \text{ then}$$

$$f_v = -\frac{f_2 + f_1}{2}; \text{ and if } f_1 < f_2,$$

$$f_z = \left|\frac{f_2 - f_1}{2}\right|, \text{ then } f_v = \frac{f_2 + f_1}{2}.$$

4. The method (10) of performing detection according to claim 1 or claim 3, further comprising:

determining the presence of multiple echoes when a number of absolute values $f_1$ of the frequency difference between the detection wave and the echo in the range of the rising edge and/or a number of absolute values $f_2$ of the frequency difference between the detection wave and the echo in the range of the falling edge is greater than 1; and

performing echo matching when the multiple echoes exist, and retaining one $f_1$ in the range of the rising edge and one $f_2$ in the range of the falling edge,

wherein preferably

the echo matching is performed in the following manner when the multiple echoes exist: selecting a group of $f_1$ and $f_2$ satisfying

$$f_d = \left|\frac{f_2 + f_1}{2}\right| \quad \text{or} \quad f_d = \left|\frac{f_2 - f_1}{2}\right|,$$

and discarding other $f_1$ and $f_2$.

5. The method (10) according to claim 1, wherein step S132 comprises: calculating the distance frequency shift component $f_z$ and the speed frequency shift component $f_v$ in the following manner when the amplitude corresponding to the frequency $f_d$ of the beating signal between the detection wave and the echo in the horizontal region is less than the amplitude threshold:

$$f_z = \frac{f_2 + f_1}{2}, \text{ and}$$

$$f_v = \frac{f_2 - f_1}{2};$$

wherein $f_1$ is an absolute value of a frequency difference between the detection wave and the echo in a range of the rising edge, and $f_2$ is an absolute value of a frequency difference between the detection wave and the echo in a range of the falling edge.

6. The method (10) according to claim 5, further comprising:

determining the presence of multiple echoes when a number of absolute values $f_1$ of the frequency difference between the detection wave and the echo in the range of the rising edge and/or a number of absolute values $f_2$ of the frequency difference between the detection wave and the echo in the range of the falling edge is greater than 1; and

performing echo matching when the multiple echoes exist, and retaining one $f_1$ in the range of the rising edge and one $f_2$ in the range of the falling edge,

wherein preferably

the echo matching is performed in the following manner when the multiple echoes exist:

determining a generated frequency shift F based on a moving speed of a device transmitting the detection wave; and

selecting a group of $f_1$ and $f_2$ with $\dfrac{f_2 - f_1}{2}$ closest to F, and discarding other $f_1$ and $f_2$.

7. A lidar (100), comprising:

a transmitting unit (101), configured to transmit a detection wave according to a preset frequency sweep waveform, wherein one cycle of the preset frequency sweep waveform consists of a rising edge, a horizontal region, and a falling edge;
a sweeping unit (103), configured to receive and reflect and transmit the detection wave to detect a target object;
a receiving unit (102), wherein an echo of the detection wave reflected from the target object is reflected by the sweeping unit (103) and then incident onto the receiving unit (102); and
a processing unit (104), coupled to the transmitting unit (101) and the receiving unit (102) and configured to obtain a distance to and/or a speed of the target object according to the echo and the detection wave;
**characterized in that** the processing unit (104) is configured to:

determine whether an amplitude corresponding to a frequency $f_d$ of a beating signal between the detection wave and the echo in the horizontal region is greater than or equal to an amplitude threshold;
calculate a distance frequency shift component $f_z$ and a speed frequency shift component $f_v$ according to a preset manner depending on whether the amplitude corresponding to the frequency $f_d$ of the beating signal between the detection wave and the echo in the horizontal region is greater than or equal to the amplitude threshold; and
calculate the distance to and the speed of the target object according to the distance frequency shift component $f_z$ and the speed frequency shift component $f_v$.

8. The lidar (100) according to claim 7, wherein the horizontal region is connected to the rising edge and the falling edge during one cycle of the preset frequency sweep waveform.

9. The lidar (100) according to claim 7, wherein the horizontal region is separated from the rising edge and the falling edge during one cycle of the preset frequency sweep waveform.

10. The lidar (100) according to claim 7, wherein the processing unit (104) is configured to:

determine which of $|f_2 + f_1|/2$ and $|f_2 - f_1|/2$ is closer to $f_d$ when the amplitude corresponding to the frequency $f_d$ of the beating signal between the detection wave and the echo in the horizontal region is greater than or equal to the amplitude threshold, wherein $f_1$ is an absolute value of a frequency difference between the detection wave and the echo in a range of the rising edge, and $f_2$ is an absolute value of a frequency difference between the detection wave and the echo in a range of the falling edge;
calculate the distance frequency shift component $f_z$ and the speed frequency shift component $f_v$ in the following manner when $|f_2 - f_1|/2$ is closer to $f_d$: $f_z = \dfrac{f_2 + f_1}{2}$, and $f_v = \dfrac{f_2 - f_1}{2}$;
and
calculate the distance frequency shift component $f_z$ and the speed frequency shift component $f_v$ in the following manner when $|f_2 + f_1|/2$ is closer to $f_d$: if $f_1 > f_2$, $f_z = \left|\dfrac{f_2 - f_1}{2}\right|$, then $f_v = -\dfrac{f_2 + f_1}{2}$; and if $f_1 < f_2$, $f_z = \left|\dfrac{f_2 - f_1}{2}\right|$, then $f_v = \dfrac{f_2 + f_1}{2}$.

11. The lidar (100) according to claim 7 or claim 10, wherein the processing unit (104) is configured to:

determine t the presence of multiple echoes when a number of absolute values $f_1$ of the frequency difference between the detection wave and the echo in the range of the rising edge and/or a number of absolute values $f_2$ of the frequency difference between the detection wave and the echo in the range of the falling edge is greater than 1; and
perform echo matching when the multiple echoes exist, and retain one $f_1$ in the range of the rising edge and one $f_2$ in the range of the falling edge,
wherein preferably
the processing unit (104) is configured to perform the echo matching in the following manner when the multiple echoes exist: selecting a group of $f_1$ and $f_2$ satisfying

$$f_d = \left| \frac{f_2 + f_1}{2} \right| \quad \text{or} \quad f_d = \left| \frac{f_2 - f_1}{2} \right| , \text{ and}$$

discarding other $f_1$ and $f_2$.

12. The lidar (100) according to claim 7, wherein the processing unit (104) is configured to calculate the distance frequency shift component $f_z$ and the speed frequency shift component $f_v$ in the following manner when the amplitude corresponding to the frequency $f_d$ of the beating signal between the detection wave and the echo in the horizontal region is less than the amplitude threshold: $f_z = \dfrac{f_2 + f_1}{2}$ , and

$$f_v = \frac{f_2 - f_1}{2} ;$$

wherein $f_1$ is an absolute value of a frequency difference between the detection wave and the echo in a range of the rising edge, and $f_2$ is an absolute value of a frequency difference between the detection wave and the echo in a range of the falling edge.

13. The lidar (100) according to claim 12, wherein the processing unit (104) is configured to:

determine a presence of multiple echoes when a number of absolute values $f_1$ of the frequency difference between the detection wave and the echo in the range of the rising edge and/or a number of absolute values $f_2$ of the frequency difference between the detection wave and the echo in the range of the falling edge is greater than 1; and
perform echo matching when the multiple echoes exist, and retain one $f_1$ in the range of the rising edge and one $f_2$ in the range of the falling edge,
wherein preferably
the processing unit (104) is configured to perform the echo matching in the following manner when the multiple echoes exist:

determining a generated frequency shift F based on a moving speed of a device transmitting the detection wave; and

selecting a group of $f_1$ and $f_2$ with $\dfrac{f_2 - f_1}{2}$ closest to F, and discarding other $f_1$ and $f_2$.

**Patentansprüche**

1. Verfahren (10) zum Ausführen einer Erkennung unter Verwendung einer frequenzmodulierten Dauerstrichwelle (FMCW), umfassend:

S11: Übertragen einer Erkennungswelle einer voreingestellten Frequenz-Sweep-Wellenform entsprechend zum Erkennen eines Zielobjekts;
S12: Empfangen eines Echos der Erkennungswelle, das von dem Zielobjekt reflektiert wird; und
S13: Erhalten einer Entfernung zu dem Zielobjekt und/oder einer Geschwindigkeit des Zielobjekts dem Echo und der Erkennungswelle entsprechend, wobei
ein Zyklus der voreingestellten Frequenz-Sweep-Wellenform aus einer steigenden Flanke, einer horizontalen Region und einer fallenden Flanke besteht;
**dadurch gekennzeichnet, dass** Schritt S13 umfasst:

S131: Bestimmen, ob eine Amplitude, die einer Frequenz $f_d$ eines Schlagsignals zwischen der Erkennungswelle und dem Echo in der horizontalen Region entspricht, größer oder gleich einer Amplitudenschwelle ist;
S132: Berechnen einer Entfernungs-Frequenzverschiebungskomponente $f_z$ und einer Geschwindigkeits-Frequenzverschiebungskomponente $f_v$ einer voreingestellten Weise entsprechend, abhängig davon, ob die Amplitude, die der Frequenz $f_d$ des Schlagsignals zwischen der Erkennungswelle und dem Echo in der horizontalen Region entspricht, größer oder gleich der Amplitudenschwelle ist; und
S133: Berechnen der Entfernung zu dem Zielobjekt und Geschwindigkeit des Zielobjekts der Entfernungs-Frequenzverschiebungskomponente $f_z$ und der Geschwindigkeits-Frequenzverschiebungskomponente $f_v$ entsprechend.

2. Verfahren (10) nach Anspruch 1, wobei die horizontale Region während eines Zyklus der voreingestellten Frequenz-Sweep-Wellenform mit der steigenden Flanke und der fallenden Flanke verbunden ist, oder
wobei die horizontale Region während eines Zyklus der voreingestellten Frequenz-Sweep-Wellenform von der steigenden Flanke und der fallenden Flanke getrennt ist.

3. Verfahren (10) nach Anspruch 1, wobei Schritt S132 umfasst:

Bestimmen, welches aus $|f_2 + f_1|/2$ und $|f_2 - f_1|/2$ näher an $f_d$ ist, wen die Amplitude, die der Frequenz $f_d$ des Schlagsignals zwischen der Erkennungswelle und dem Echo in der horizontalen Region größer oder gleich der Amplitudenschwelle ist, wobei $f_1$ ein absoluter Wert einer Frequenzdifferenz zwischen der Erkennungswelle und dem Echo in einem Bereich der steigenden Flanke ist, und $f_2$ ein absoluter Wert einer Frequenzdifferenz zwischen der Erkennungswelle und dem Echo in einem Bereich der fallenden Flanke ist;

Berechnen der Entfernungs-Frequenzverschiebungskomponente $f_z$ und der Geschwindigkeits-Frequenzverschiebungskomponente $f_v$ in der folgenden Weise, wenn näher an $f_d$ ist:

$$f_z = \frac{f_2 + f_1}{2}, \text{ und } f_v = \frac{f_2 - f_1}{2}; \text{ und}$$

Berechnen der Entfernungs-Frequenzverschiebungskomponente $f_z$ und der Geschwindigkeits-Frequenzverschiebungskomponente $f_v$ in der folgenden Weise, wenn $|f_2 + f_1|/2$ näher an $f_d$ ist: wenn $f_1 > f_2$,

$$f_z = \left| \frac{f_2 - f_1}{2} \right|, \text{ dann}$$

$$f_v = -\frac{f_2 + f_1}{2}; \text{ und wenn } f_1 < f_2,$$

$$f_z = \left| \frac{f_2 - f_1}{2} \right|, \quad \text{dann}$$

$$f_v = \frac{f_2 + f_1}{2}.$$

4. Verfahren (10) des Durchführens der Erkennung nach Anspruch 1 oder Anspruch 3, ferner umfassend:

Bestimmen des Vorhandenseins mehrerer Echos, wenn eine Anzahl absoluter Werte $f_1$ der Frequenzdifferenz zwischen der Erkennungswelle und dem Echo in dem Bereich der steigenden Flanke und/oder eine Anzahl absoluter Werte $f_2$ der Frequenzdifferenz zwischen der Erkennungswelle und dem Echo im Bereich der fallenden Flanke größer als 1 ist; und
Ausführen eines Echoabgleichs, wenn mehrere Echos vorhanden sind und Behalten von einem $f_1$ in dem Bereich der steigenden Flanke und einem $f_2$ in dem Bereich der fallenden Flanke, wobei bevorzugt
der Echoabgleich in der folgenden Weise ausgeführt wird, wenn die mehreren Echos vorhanden sind:
Auswählen einer Gruppe von $f_1$ und $f_2$, die

$$f_d = \left| \frac{f_2 + f_1}{2} \right| \quad \text{oder}$$

$$f_d = \left| \frac{f_2 - f_1}{2} \right| \quad \text{erfüllen, und verwerfen}$$

anderer $f_1$ und $f_2$.

5. Verfahren (10) nach Anspruch 1, wobei Schritt S132 umfasst:

Berechnen der Entfernungs-Frequenzverschiebungskomponente $f_z$ und der Geschwindigkeits-Frequenzverschiebungskomponente $f_v$ in der folgenden Weise, wenn die Amplitude, die der Frequenz $f_d$ des Schlagsignals zwischen der Erkennungswelle und dem Echo in der horizontalen Region entspricht, weniger ist als die Amplitudenschwelle: $f_z = \frac{f_2 + f_1}{2}$, und

$$f_v = \frac{f_2 - f_1}{2};$$

wobei $f_1$ ein absoluter Wert einer Frequenzdifferenz zwischen der Erkennungswelle und dem Echo in einem Bereich der steigenden Flanke ist und $f_2$ ein absoluter Wert einer Frequenzdifferenz zwischen der Erkennungswelle und dem Echo in einem Bereich der fallenden Flanke ist.

6. Verfahren (10) nach Anspruch 5, ferner umfassend:

Bestimmen des Vorhandenseins mehrerer Echos, wenn eine Anzahl absoluter Werte $f_1$ der Frequenzdifferenz zwischen der Erkennungswelle und dem Echo in dem Bereich der steigenden Flanke und/oder eine Anzahl absoluter Werte $f_2$ der Frequenzdifferenz zwischen der Erkennungswelle und dem Echo im Bereich der fallenden Flanke größer als 1 ist; und
Ausführen eines Echoabgleichs, wenn mehrere Echos vorhanden sind und Behalten von einem $f_1$ in dem Bereich der steigenden Flanke und einem $f_2$ in dem Bereich der fallenden Flanke, wobei bevorzugt
der Echoabgleich in der folgenden Weise ausgeführt wird, wenn die mehreren Echos vorhanden sind: Bestimmen einer generierten Frequenzverschiebung F auf Grundlage einer Bewegungsgeschwindigkeit einer Vorrichtung, die die Erkennungswelle überträgt; und
Auswählen einer Gruppe von $f_1$ und $f_2$, wobei $\frac{f_2 - f_1}{2}$ am nächsten an F ist, und Verwerfen

anderer $f_1$ und $f_2$.

7. Lidar (100), aufweisend:

eine Übertragungseinheit (101), eingerichtet, um eine Erkennungswelle einer voreingestellten Frequenz-Sweep-Wellenform entsprechend zu übertragen, wobei ein Zyklus der voreingestellten Frequenz-Sweep-Wellenform aus einer steigenden Flanke, einer horizontalen Region und einer fallenden Flanke besteht;
eine Sweeping-Einheit (103), eingerichtet zum Empfangen und Reflektieren und Übertragen der Erkennungswelle zum Erkennen eines Zielobjekts;
eine Empfangseinheit (102), wobei ein Echo der Erkennungswelle, das von dem Zielobjekt reflektiert wird, durch die die Sweeping-Einheit (103) reflektiert wird und dann auf die Empfangseinheit (102) fällt; und
eine Verarbeitungseinheit (104), die an die Übertragungseinheit (101) und die Empfangseinheit (102) gekoppelt ist und eingerichtet ist, eine Entfernung zu dem Zielobjekt und/oder eine Geschwindigkeit des Zielobjekts dem Echo und der Erkennungswelle entsprechend zu erhalten;
**dadurch gekennzeichnet, dass** die Verarbeitungseinheit (104) eingerichtet ist zum:

Bestimmen, ob eine Amplitude, die einer Frequenz $f_d$ eines Schlagsignals zwischen der Erkennungswelle und dem Echo in der horizontalen Region entspricht, größer oder gleich einer Amplitudenschwelle ist;
Berechnen einer Entfernungs-Frequenzverschiebungskomponente $f_z$ und einer Geschwindigkeits-Frequenzverschiebungskomponente $f_v$ einer voreingestellten Weise entsprechend, abhängig davon, ob die Amplitude, die der Frequenz $f_d$ des Schlagsignals zwischen der Erkennungswelle und dem Echo in der horizontalen Region entspricht, größer oder gleich der Amplitudenschwelle ist; und
Berechnen der Entfernung zu dem Zielobjekt und Geschwindigkeit des Zielobjekts der Entfernungs-Frequenzverschiebungskomponente fz und der Geschwindigkeits-Frequenzverschiebungskomponente $f_v$ entsprechend.

8. Lidar (100) nach Anspruch 7, wobei die horizontale Region während eines Zyklus der voreingestellten Frequenz-Sweep-Wellenform mit der steigenden Flanke und der fallenden Flanke verbunden ist.

9. Lidar (100) nach Anspruch 7, wobei die horizontale Region während eines Zyklus der voreingestellten Frequenz-Sweep-Wellenform von der steigenden Flanke und der fallenden Flanke getrennt ist.

10. Lidar (100) nach Anspruch 7, wobei die Verarbeitungseinheit (104) eingerichtet ist zum:

Bestimmen, welches aus $|f_2 + f_1| / 2$ und $|f_2 - f_1| / 2$ näher an $f_d$ ist, wen die Amplitude, die der Frequenz $f_d$ des Schlagsignals zwischen der Erkennungswelle und dem Echo in der horizontalen Region größer oder gleich der Amplitudenschwelle ist, wobei $f_1$ ein absoluter Wert einer Frequenzdifferenz zwischen der Erkennungswelle und dem Echo in einem Bereich der steigenden Flanke ist, und $f_2$ ein absoluter Wert einer Frequenzdifferenz zwischen der Erkennungswelle und dem Echo in einem Bereich der fallenden Flanke ist;
Berechnen der Entfernungs-Frequenzverschiebungskomponente $f_z$ und der Geschwindigkeits-Frequenzverschiebungskomponente $f_v$ in der folgenden Weise, wenn $|f_2 - f_1| / 2$ näher an $f_d$

ist: $$f_z = \frac{f_2 + f_1}{2} \text{, und } f_v = \frac{f_2 - f_1}{2};$$

und
Berechnen der Entfernungs-Frequenzverschiebungskomponente $f_z$ und der Geschwindigkeits-Frequenzverschiebungskomponente $f_v$ in der folgenden Weise, wenn $|f_2 + f_1| / 2$ näher an $f_d$

ist: wenn $f_1 > f_2$, $$f_z = \left| \frac{f_2 - f_1}{2} \right| \text{, dann}$$

$$f_v = -\frac{f_2 + f_1}{2}; \text{ und wenn } f_1 < f_2,$$

$$f_z = \left| \frac{f_2 - f_1}{2} \right| \text{, dann } f_v = \frac{f_2 + f_1}{2}.$$

11. Lidar (100) nach Anspruch 7 oder Anspruch 10, wobei die Verarbeitungseinheit (104) eingerichtet ist zum:

Bestimmen des Vorhandenseins mehrerer Echos, wenn eine Anzahl absoluter Werte $f_1$ der Frequenzdifferenz zwischen der Erkennungswelle und dem Echo in dem Bereich der steigenden Flanke und/oder eine Anzahl absoluter Werte $f_2$ der Frequenzdifferenz zwischen der Erkennungswelle und dem Echo im Bereich der fallenden Flanke größer als 1 ist; und
Ausführen eines Echoabgleichs, wenn mehrere Echos vorhanden sind und Behalten von einem $f_1$ in dem Bereich der steigenden Flanke und

einem $f_2$ in dem Bereich der fallenden Flanke, wobei bevorzugt die Verarbeitungseinheit (104) eingerichtet ist zum Ausführen des Echoabgleichs in der folgenden Weise, wenn die mehreren Echos vorhanden sind: Auswählen einer Gruppe von $f_1$ und $f_2$ die

$$f_d = \left| \frac{f_2 + f_1}{2} \right|$$ oder

$$f_d = \left| \frac{f_2 - f_1}{2} \right|$$ erfüllen, und Verwerfen von anderen $f_1$ und $f_2$.

12. Lidar (100) nach Anspruch 7, wobei die Verarbeitungseinheit (104) eingerichtet ist zum Berechnen der Entfernungs-Frequenzverschiebungskomponente $f_z$ und der Geschwindigkeits-Frequenzverschiebungskomponente $f_v$ in der folgenden Weise, wenn die Amplitude, die der Frequenz $f_d$ des Schlagsignals zwischen der Erkennungswelle und dem Echo in der horizontalen Region entspricht, weniger ist als die Amplitudenschwelle:

$$f_z = \frac{f_2 + f_1}{2},$$

und $$f_v = \frac{f_2 - f_1}{2};$$

wobei $f_1$ ein absoluter Wert einer Frequenzdifferenz zwischen der Erkennungswelle und dem Echo in einem Bereich der steigenden Flanke ist und $f_2$ ein absoluter Wert einer Frequenzdifferenz zwischen der Erkennungswelle und dem Echo in einem Bereich der fallenden Flanke ist.

13. Lidar (100) nach Anspruch 12, wobei die Verarbeitungseinheit (104) eingerichtet ist zum:

Bestimmen des Vorhandenseins mehrerer Echos, wenn eine Anzahl absoluter Werte $f_1$ der Frequenzdifferenz zwischen der Erkennungswelle und dem Echo in dem Bereich der steigenden Flanke und/oder eine Anzahl absoluter Werte $f_2$ der Frequenzdifferenz zwischen der Erkennungswelle und dem Echo im Bereich der fallenden Flanke größer als 1 ist; und Ausführen eines Echoabgleichs, wenn mehrere Echos vorhanden sind und Behalten von einem $f_1$ in dem Bereich der steigenden Flanke und einem $f_2$ in dem Bereich der fallenden Flanke, wobei bevorzugt die Verarbeitungseinheit (104) eingerichtet ist zum Ausführen des Echoabgleichs in folgender Weise, wenn die mehreren Echos vorhanden sind:

Bestimmen einer generierten Frequenzverschiebung F auf Grundlage einer Bewegungsgeschwindigkeit eines Geräts, das die Erkennungswelle überträgt; und Auswählen einer Gruppe von $f_1$ und $f_2$, wobei

bei $\dfrac{f_2 - f_1}{2}$ am nächsten an F ist, und Verwerfen anderer $f_1$ und $f_2$.

## Revendications

1. Procédé (10) de réalisation d'une détection à l'aide d'une onde continue modulée en fréquence (FMCW), comprenant le fait de :

S11 : transmettre une onde de détection selon une forme d'onde de balayage de fréquence prédéfinie afin de détecter un objet cible ; S12 : recevoir un écho de l'onde de détection réfléchie par l'objet cible ; et S13 : obtenir une distance jusqu'à l'objet cible et/ou une vitesse de l'objet cible selon l'écho et l'onde de détection, dans lequel un cycle de la forme d'onde de balayage de fréquence prédéfinie comprend un front montant, une région horizontale et un front descendant ; **caractérisé en ce que** l'étape S13 comprend le fait de :

S131 : déterminer si une amplitude correspondant à une fréquence $f_d$ d'un signal de battement entre l'onde de détection et l'écho dans la région horizontale est supérieure ou égale à un seuil d'amplitude ; S132 : calculer une composante de glissement de fréquence en distance $f_z$ et une composante de glissement de fréquence en vitesse $f_v$ selon une manière prédéfinie, selon que l'amplitude correspondant à la fréquence $f_d$ du signal de battement entre l'onde de détection et l'écho dans la région horizontale est supérieure ou égale au seuil d'amplitude ; et S133 : calculer la distance jusqu'à l'objet cible et la vitesse de l'objet cible selon la composante de glissement de fréquence en distance $f_z$ et la composante de glissement de fréquence en vitesse $f_v$.

2. Procédé (10) selon la revendication 1, dans lequel la région horizontale est reliée au front montant et au front descendant pendant un cycle de la forme d'onde de balayage de fréquence prédéfinie, ou dans lequel la région horizontale est séparée du front montant et du front descendant pendant un cycle de la forme d'onde de balayage de fréquence prédéfinie.

**3.** Procédé (10) selon la revendication 1, dans lequel l'étape S132 comprend le fait de :

déterminer quelle valeur parmi $|f_2 + f_1| / 2$ et $|f_2 - f_1| / 2$ est la plus proche de la fréquence $f_d$ lorsque l'amplitude correspondant à la fréquence $f_d$ du signal de battement entre l'onde de détection et l'écho dans la région horizontale est supérieure ou égale au seuil d'amplitude, où $f_1$ est une valeur absolue d'une différence de fréquence entre l'onde de détection et l'écho dans une plage du front montant, et $f_2$ est une valeur absolue d'une différence de fréquence entre l'onde de détection et l'écho dans une plage du front descendant ;

calculer la composante de glissement de fréquence en distance $f_z$ et la composante de glissement de fréquence en vitesse $f_v$ de la manière suivante lorsque $|f_2 + f_1| / 2$ est plus proche de $f_d$ : $f_z = \dfrac{f_2 + f_1}{2}$, et $f_v = \dfrac{f_2 - f_1}{2}$ ; et

calculer la composante de glissement de fréquence en distance $f_z$ et la composante de glissement de fréquence en vitesse $f_v$, de la manière suivante, lorsque $|f_2 + f_1| / 2$ est plus proche de $f_d$ : si $f_1 > f_2$, $f_z = \left|\dfrac{f_2 - f_1}{2}\right|$, alors

$f_v = -\dfrac{f_2 + f_1}{2}$ ; et si $f_1 < f_2$, $f_z = \left|\dfrac{f_2 - f_1}{2}\right|$,

alors $f_v = \dfrac{f_2 + f_1}{2}$.

**4.** Procédé (10) de réalisation de détection selon la revendication 1 ou 3, comprenant en outre le fait de :

déterminer la présence de multiples échos lorsqu'un nombre de valeurs absolues $f_1$ de la différence de fréquence entre l'onde de détection et l'écho dans la plage du front montant et/ou un nombre de valeurs absolues $f_2$ de la différence de fréquence entre l'onde de détection et l'écho dans la plage du front descendant est supérieur à 1 ; et

effectuer une mise en correspondance d'échos lorsque les multiples échos existent, et conserver une valeur $f_1$ dans la plage du front montant et une valeur $f_2$ dans la plage du front descendant,

dans lequel, de préférence

la mise en correspondance d'échos est effectuée de la manière suivante lorsque de multiples échos existent :

en sélectionnant un groupe de valeurs $f_1$ et $f_2$

satisfaisant $f_d = \left|\dfrac{f_2 + f_1}{2}\right|$ ou $f_d = \left|\dfrac{f_2 - f_1}{2}\right|$, et en rejetant les autres valeurs $f_1$ et $f_2$.

**5.** Procédé (10) selon la revendication 1, dans lequel l'étape S132 comprend le fait de : calculer la composante de glissement de fréquence en distance $f_z$ et la composante de glissement de fréquence en vitesse $f_v$, de la manière suivante, lorsque l'amplitude correspondant à la fréquence $f_d$ du signal de battement entre l'onde de détection et l'écho dans la région horizontale est inférieure au seuil d'amplitude :

$f_z = \dfrac{f_2 + f_1}{2}$, et $f_v = \dfrac{f_2 - f_1}{2}$ ;

où $f_1$ est une valeur absolue d'une différence de fréquence entre l'onde de détection et l'écho dans une plage du front montant, et $f_2$ est une valeur absolue d'une différence de fréquence entre l'onde de détection et l'écho dans une plage du front descendant.

**6.** Procédé (10) selon la revendication 5, comprenant en outre le fait de :

déterminer la présence de multiples échos lorsqu'un nombre de valeurs absolues $f_1$ de la différence de fréquence entre l'onde de détection et l'écho dans la plage du front montant et/ou un nombre de valeurs absolues $f_2$ de la différence de fréquence entre l'onde de détection et l'écho dans la plage du front descendant est supérieur à 1 ; et

effectuer une mise en correspondance d'échos lorsque les multiples échos existent, et conserver une valeur $f_1$ dans la plage du front montant et une valeur $f_2$ dans la plage du front descendant,

dans lequel, de préférence

la mise en correspondance d'échos est effectuée de la manière suivante lorsque les multiples échos existent : en déterminant un glissement de fréquence généré F sur la base d'une vitesse de déplacement d'un dispositif transmettant l'onde de détection ; et

en sélectionnant un groupe de valeurs $f_1$ et $f_2$

avec $\dfrac{f_2 - f_1}{2}$ la plus proche de F, et en rejetant les autres valeurs $f_1$ et $f_2$.

**7.** Lidar (100), comprenant :

une unité d'émission (101), configurée pour transmettre une onde de détection selon une forme d'onde de balayage de fréquence prédéfinie, dans laquelle un cycle de la forme d'onde de balayage de fréquence prédéfinie comprend un front montant, une région horizontale et un front descendant ;

une unité de balayage (103), configurée pour recevoir, réfléchir et transmettre l'onde de détection afin de détecter un objet cible ;

une unité de réception (102), dans laquelle un écho de l'onde de détection réfléchie par l'objet cible est réfléchi par l'unité de balayage (103), puis est incident sur l'unité de réception (102) ; et

une unité de traitement (104), couplée à l'unité d'émission (101) et à l'unité de réception (102) et configurée pour obtenir une distance jusqu'à l'objet cible et/ou une vitesse de l'objet cible selon l'écho et l'onde de détection ;

**caractérisé en ce que** l'unité de traitement (104) est configurée pour :

déterminer si une amplitude correspondant à une fréquence $f_d$ d'un signal de battement entre l'onde de détection et l'écho dans la région horizontale est supérieure ou égale à un seuil d'amplitude ;

calculer une composante de glissement de fréquence en distance $f_z$ et une composante de glissement de fréquence en vitesse $f_v$ selon une manière prédéfinie, selon que l'amplitude correspondant à la fréquence $f_d$ du signal de battement entre l'onde de détection et l'écho dans la région horizontale est supérieure ou égale au seuil d'amplitude ; et

calculer la distance jusqu'à l'objet cible et la vitesse de l'objet cible selon la composante de glissement de fréquence en distance $f_z$ et la composante de glissement de fréquence en vitesse $f_v$.

8. Lidar (100) selon la revendication 7, dans lequel la région horizontale est reliée au front montant et au front descendant pendant un cycle de la forme d'onde de balayage de fréquence prédéfinie.

9. Lidar (100) selon la revendication 7, dans lequel la région horizontale est séparée du front montant et du front descendant pendant un cycle de la forme d'onde de balayage de fréquence prédéfinie.

10. Lidar (100) selon la revendication 7, dans lequel l'unité de traitement (104) est configurée pour :

déterminer quelle valeur parmi $|f_2 + f_1| / 2$ et $|f_2 - f_1| / 2$ est la plus proche de la fréquence $f_d$ lorsque l'amplitude correspondant à la fréquence $f_d$ du signal de battement entre l'onde de détection et l'écho dans la région horizontale est supérieure ou égale au seuil d'amplitude, où $f_1$ est une valeur absolue d'une différence de fréquence entre l'onde de détection et l'écho dans une plage du front montant, et $f_2$ est une valeur absolue d'une différence de fréquence entre l'onde de détection et l'écho dans une plage du front descendant ;

calculer la composante de glissement de fréquence en distance $f_z$ et la composante de glissement de fréquence en vitesse $f_v$ de la manière suivante lorsque $|f_2 + f_1| / 2$ est plus proche de $f_d$ : $f_z = \dfrac{f_2 + f_1}{2}$, et $f_v = \dfrac{f_2 - f_1}{2}$ ; et

calculer la composante de glissement de fréquence en distance $f_z$ et la composante de glissement de fréquence en vitesse $f_v$, de la manière suivante, lorsque $|f_2 + f_1| / 2$ est plus proche de $f_d$ : si $f_1 > f_2$, $f_z = \left|\dfrac{f_2 - f_1}{2}\right|$, alors $f_v = -\dfrac{f_2 + f_1}{2}$ ; et si $f_1 < f_2$, $f_z = \left|\dfrac{f_2 - f_1}{2}\right|$, alors $f_v = \dfrac{f_2 + f_1}{2}$.

11. Lidar (100) selon la revendication 7 ou 10, dans lequel l'unité de traitement (104) est configurée pour :

déterminer la présence de multiples échos lorsqu'un nombre de valeurs absolues $f_1$ de la différence de fréquence entre l'onde de détection et l'écho dans la plage du front montant et/ou un nombre de valeurs absolues $f_2$ de la différence de fréquence entre l'onde de détection et l'écho dans la plage du front descendant est supérieur à 1 ; et

effectuer une mise en correspondance d'échos lorsque les multiples échos existent, et conserver une valeur $f_1$ dans la plage du front montant et une valeur $f_2$ dans la plage du front descendant,

dans lequel, de préférence l'unité de traitement (104) est configurée pour effectuer la mise en correspondance d'échos de la manière suivante lorsque de multiples échos existent : en sélectionnant un groupe de valeurs $f_1$ et $f_2$ satisfaisant $f_d = \left|\dfrac{f_2 + f_1}{2}\right|$ ou $f_d = \left|\dfrac{f_2 - f_1}{2}\right|$, et en rejetant les autres valeurs $f_1$ et $f_2$.

12. Lidar (100) selon la revendication 7, dans lequel l'unité de traitement (104) est configurée pour calculer la composante de glissement de fréquence en distance $f_z$ et la composante de glissement de fréquence en vitesse $f_v$ de la manière suivante lorsque l'amplitude correspondant à la fréquence $f_d$ du signal de battement entre l'onde de détection et l'écho dans la région horizontale est inférieure au seuil d'amplitude :

$$f_z = \frac{f_2 + f_1}{2}, \text{ et } f_v = \frac{f_2 - f_1}{2} \; ;$$

où $f_1$ est une valeur absolue d'une différence de fréquence entre l'onde de détection et l'écho dans une plage du front montant, et $f_2$ est une valeur absolue d'une différence de fréquence entre l'onde de détection et l'écho dans une plage du front descendant.

13. Lidar (100) selon la revendication 12, dans lequel l'unité de traitement (104) est configurée pour :

déterminer la présence de multiples échos lorsqu'un nombre de valeurs absolues $f_1$ de la différence de fréquence entre l'onde de détection et l'écho dans la plage du front montant et/ou un nombre de valeurs absolues $f_2$ de la différence de fréquence entre l'onde de détection et l'écho dans la plage du front descendant est supérieur à 1 ; et
effectuer une mise en correspondance d'échos lorsque les multiples échos existent, et conserver une valeur $f_1$ dans la plage du front montant et une valeur $f_2$ dans la plage du front descendant,
dans lequel, de préférence
l'unité de traitement (104) est configurée pour effectuer la mise en correspondance d'échos de la manière suivante lorsque les multiples échos existent :

en déterminant un glissement de fréquence généré F sur la base d'une vitesse de déplacement d'un dispositif transmettant l'onde de détection ; et
en sélectionnant un groupe de valeurs $f_1$ et $f_2$ avec $\dfrac{f_2 - f_1}{2}$ la plus proche de F, et en rejetant les autres valeurs $f_1$ et $f_2$.

Laser device    Coupler 1                    Detection beam

Detection beam
(echo)

Local oscillator    Coupler 2  Processing
beam                          unit

Collimating    Vibrating
unit          mirror

# FIG. 1

Ineffective
beating region

Effective beating
region

$f$

Transmitted
signal

$\Delta t$

Received
signal

$\Delta f$

Transmitted
signal

Received
signal

Transmitted
signal

Received
signal

$t_1$        $t$

# FIG. 2

FIG. 3A

FIG. 3B

FIG. 4

<u>10</u>

| |
|---|
| Transmitting a detection wave according to a preset frequency sweep waveform to detect a target object, where one cycle of the preset frequency sweep waveform consists of a rising edge, a horizontal region, and a falling edge |

S11

| |
|---|
| Receiving an echo of the detection wave reflected from the target object |

S12

| |
|---|
| Obtaining a distance to and/or a speed of the target object according to the echo and the detection wave |

S13

# FIG. 5

# FIG. 6A

# FIG. 6B

FIG. 6C

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110002171 A
- CN 108415010 A
- US 10036805 B2